# EUROPEAN PATENT APPLICATION

(11) **EP 4 560 722 A1**
(43) Date of publication of application: **28.05.2025**
(21) Application number: 24214411.1
(22) Date of filing: 21.11.2024
(51) Int. Cl.: H01M 4/13, H01M 4/139, H01M 4/66

(54) **ELECTRODES, PREPARATION METHODS THEREOF, AND RECHARGEABLE LITHIUM BATTERIES**

(30) Priority: 24.11.2023 KR 20230166081
(71) Applicant: SAMSUNG SDI CO., LTD., Yongin-si, Gyeonggi-do 17084 (KR)
(72) Inventor: KIM, Soochan, 17084 Gyeonggi-do (KR); KIM, Beom Kwon, 17084 Gyeonggi-do (KR); KIM, Minjun, 17084 Gyeonggi-do (KR); AN, Hoyong, 17084 Gyeonggi-do (KR)
(74) Representative: Michalski Hüttermann & Partner Patentanwälte mbB

(57) **Abstract**

Disclosed are an electrode, a preparation method thereof, and a rechargeable lithium battery including the electrode, the electrode including an electrode current collector (101), and a sliding controller (201) located on an edge area of the electrode current collector, wherein the sliding controller includes a compound having a contact angle of about 30° to about 140°.

## Description

### BACKGROUND

### 1. Field

Electrodes, preparation methods thereof, and rechargeable lithium batteries including the electrodes are disclosed.

### 2. Description of the Related Art

A portable information device such as, e.g., a cell phone, a laptop, smart phone, and the like, or an electric vehicle, typically uses a rechargeable lithium battery having high energy density and easy portability as a driving power source. Research is conducted to use a rechargeable lithium battery with high energy density as a driving power source or power storage power source for hybrid or electric vehicles.

In response to the demand for higher capacity batteries, various improvement methods are being researched to increase the utilization of space within the battery along with the development of various materials.

### SUMMARY

Example embodiments of this disclosure include an electrode and a method of preparing the electrode, and a rechargeable lithium battery including the electrode, which can reduce or prevent lithium precipitation by reducing or preventing the sliding phenomenon of the electrode without substantial deterioration of processability or substantial deterioration of the material due to additional processes.

In example embodiments, an electrode includes an electrode current collector. and a sliding controller located on an edge area of the electrode current collector. wherein the sliding controller includes a compound having a contact angle of about 30 ° to about 140 °.

In example embodiments, a method of preparing an electrode includes preparing an electrode current collector, forming a sliding controller on the edge area of the electrode current collector, wherein the sliding controller includes a compound having a contact angle of about 30 ° to about 140 °.

In example embodiments, a rechargeable lithium battery includes a positive electrode, a negative electrode, and an electrolyte, wherein at least one of the positive electrode and the negative electrode is the aforementioned electrode.

The electrode, and the method of preparing the electrode, according to example embodiments have less risk of deterioration of processability or deterioration of materials during the preparation process, and can reduce or suppress lithium precipitation by reducing or suppressing the sliding phenomenon. The rechargeable lithium battery including the electrode can exhibit improved, desired or advantageous lifecycle characteristics.

### BRIEF DESCRIPTION OF THE DRAWINGS

FIGS. 1 to 4 are cross-sectional views schematically showing rechargeable lithium batteries, according to example embodiments.
FIG. 5 is a cross-sectional view schematically showing the structure of a conventional electrode.
FIG. 6 is a cross-sectional view schematically showing the structure of an electrode, according to example embodiments.
FIG. 7 is a plan view schematically showing the structure of an electrode, according to example embodiments.
FIG. 8 is an image taken with a scanning electron microscope (SEM) of the structure of a conventional electrode in which a sliding phenomenon occurred at the end of the electrode.
FIG. 9 is a photograph taken with a scanning electron microscope to evaluate the presence or absence of a sliding phenomenon in the electrode prepared in Example 1.
FIG. 10 is a photograph taken with a scanning electron microscope to evaluate the presence or absence of a sliding phenomenon in the electrode prepared in Comparative Example 1.

### DETAILED DESCRIPTION

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

"Substituted" refers to replacement of at least one hydrogen by a substituent selected from a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

"Thickness" may be measured through photographs taken with an optical microscope, such as a scanning electron microscope.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode

In example embodiments, an electrode includes an electrode current collector, and a sliding controller located on an edge area of the electrode current collector, wherein the sliding controller includes a compound having a contact angle of about 30 ° to about 140 °.

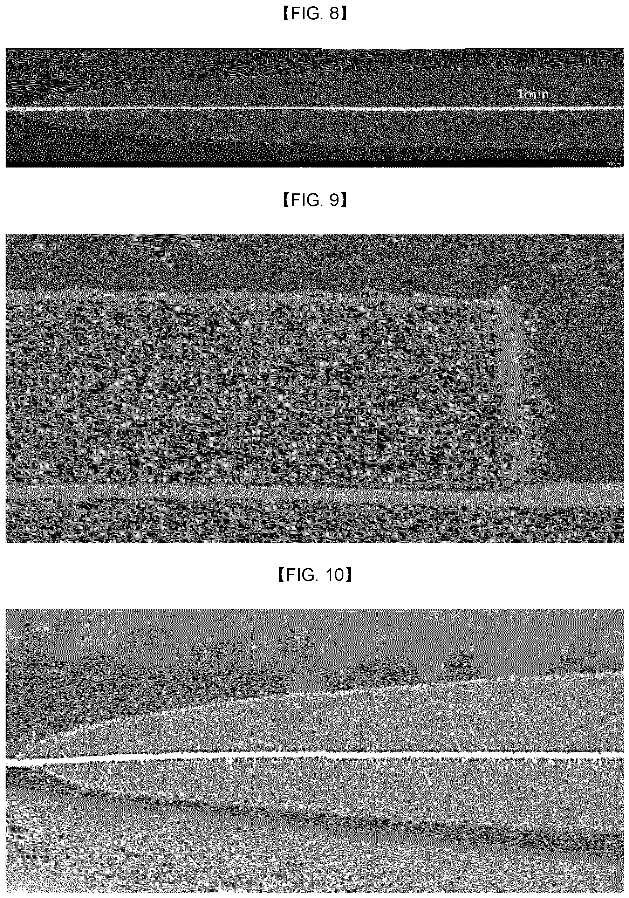

In response to the demand for higher capacity in batteries, it may be advantageous to increase utilization of a space within the batteries, along with development of various materials. For example, in manufacturing positive and negative electrodes, as shown in FIG. 8, a sliding phenomenon, where an electrode active material layer becomes thinner towards the outside at the end of each electrode, may readily occur. In particular, a battery shape may be changed to a stack type from a winding type, but the sliding phenomenon occurs in a process of manufacturing stack-type electrodes, and thus brings about precipitation of lithium ions, which may set a limit to increasing capacity. Accordingly, there are conventional methods of suppressing the sliding phenomenon occurring in in the process of manufacturing electrodes by, e.g., pre-attaching a tape or performing a laser etching treatment. However, these methods may increase process time and cost due to additional pre- or post-processing or modify an active material, a binder, etc. Accordingly, example embodiments include an electrode and a method of manufacturing the electrode, which may readily reduce or prevent the sliding phenomenon of the electrode without additional processability deterioration or modification.

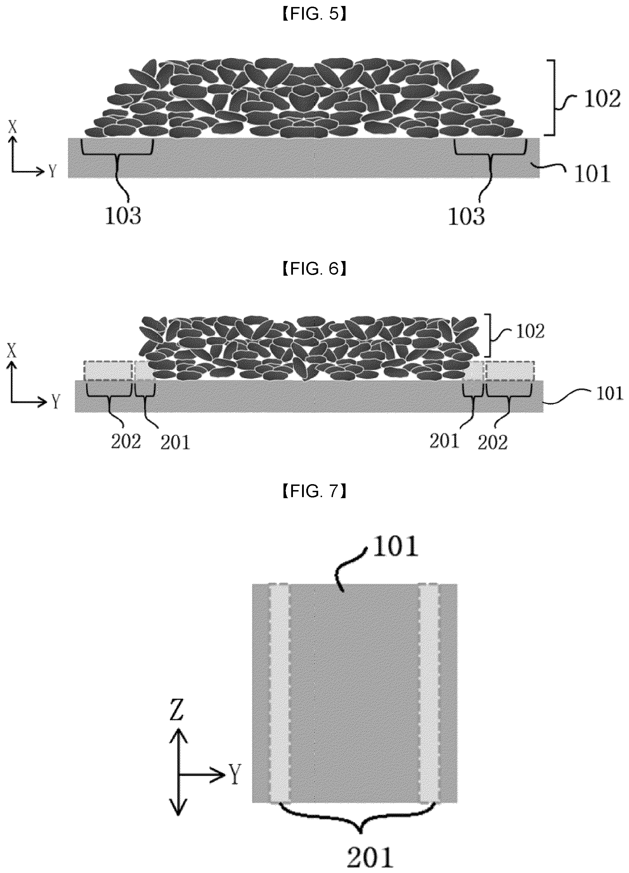

In order to illustrate a structure of the example electrode to be implemented, a cross-sectional view of a structure of a conventional electrode is represented in Fig 5, and a cross-sectional view of a structure of the electrode according to example embodiments is represented in Fig 6.

Conventionally, as shown in FIG. 5, there is a sliding portion 103 in which an electrode active material layer 102 becomes thinner toward the outside in an edge area of the electrode active material layer 102 on an electrode current collector 101.

In contrast to FIG. 5, the electrode according to example embodiments illustrated in FIG. 6 includes the electrode current collector 101 and a sliding controller 201 disposed in the edge area of the electrode current collector 101. Herein, FIG. 6 is a cross-sectional view of the structure of the electrode according to example embodiments, which are observed in a thickness direction (X) and a width direction (Y) perpendicular thereto, and FIG. 7 is a top view of the electrode according to example embodiments, which is observed in the width direction (Y) and a length direction (Z). As shown in FIG. 7, when the electrode is observed from the top, the sliding controller 201 is positioned at both ends of the edge area of the electrode current collector 101. The sliding controller 201 is or includes a layer reducing or suppressing the sliding phenomenon that may occur in the electrode active material layer 102, and may thus constitute a physical barrier for the electrode slurry for forming an electrode active material layer during the preparation process, which results in the reduction or suppression of the sliding phenomenon.

In example embodiments, the sliding controller 201 includes a compound with a contact angle of about 30 ° to about 140 °, wherein the contact angle of the compound may be, for example, greater than or equal to about 32 °, greater than or equal to about 35 °, or greater than or equal to about 38 °, and less than or equal to about 138 °, less than or equal to about 135 °, less than or equal to about 130 °, or less than or equal to about 128 °. Herein, the contact angle refers to a contact angle measured after depositing the compound on the electrode current collector surface. The sliding controller 201 includes the compound to control a contact angle in the edge area to the electrode active material layer, so that the contact angle may be higher than the contact angle of the electrode active material layer with no sliding controller, effectively acting as a physical barrier.

Types of the compound are not particularly limited but may be, for example, an organometallic compound and may be, for example, an organosilane-based compound. The organic metal-based or organosilane-based compound may be capable of reducing or suppressing the sliding phenomenon of the electrode active material layer and may be locally coated on an edge area of a positive electrode current collector, thus contributing to implementing a desired dimension of electrodes through wetting control.

In example embodiments, the compound having a contact angle of about 30° to about 140° may be an alkoxy silane-based compound. For example, the alkoxy silane-based compound may include a C1 to C10 alkoxy group. Alternatively, the alkoxy silane-based compound may include a C1 to C8 alkoxy group, a C1 to C5 alkoxy group, or a C1 to C3 alkoxy group. For example, the alkoxy silane-based compound may include a methoxy group, an ethoxy group, or a combination thereof as the alkoxy group. As an example, the alkoxy silane-based compound may include two or more alkoxy groups, or may include two to four alkoxy groups. For example, the alkoxy silane-based compound may include a compound represented by Chemical Formula 1 discussed below. When the sliding controller includes the aforementioned compound, the sliding phenomenon can be reduced or suppressed by effectively substantially controlling the contact angle of the electrode slurry during the preparation process, and as a result, lithium precipitation can be effectively reduced or suppressed, and lifecycle characteristics of the battery can be effectively improved.

[Chemical Formula 1] R¹ₐSi(OR²)₄₋ₐ

In Chemical Formula 1, R¹ is a substituted or unsubstituted C1 to C20 alkyl group, or C2 to C10 alkenyl group, R² is a substituted or unsubstituted C1 to C10 alkyl group, and a is an integer of 1 to 3.

As an example, R¹ may be or include a C1 to C20 alkyl group substituted or unsubstituted with an amino group. For example, R¹ may be at least one of an unsubstituted C1 to C20 alkyl group, a C1 to C20 alkyl group substituted with an amino group, a C1 to C20 alkyl group substituted with an amine group substituted with an aminoalkyl group, or an unsubstituted C2 to C10 alkenyl group, or a combination thereof. Alternatively, R¹ may be or include at least one of an unsubstituted C1 to C18 alkyl group, a C1 to C10 alkyl group substituted with an amino group, a C1 to C10 alkyl group substituted with an amine group substituted with an aminoalkyl group, an unsubstituted C2 to C6 alkenyl group, or a combination thereof. Alternatively, R¹ may be or include at least one of an unsubstituted C1 to C18 alkyl group, a C1 to C5 alkyl group substituted with an amino group, a C1 to C5 alkyl group substituted with an amine group substituted with a C1 to C5 aminoalkyl group, or an unsubstituted C2 to C4 alkyl group, or a combination thereof.

As an example, R² may be or include an unsubstituted C1 to C10 alkyl group, for example, an unsubstituted C1 to C8 alkyl group, an unsubstituted C1 to C5 alkyl group, or an unsubstituted C1 to C3 alkyl group.

For example, the parameter "a" in Chemical Formula (1) may be an integer of 1 or 2.

In example embodiments, R¹ may be or include at least one of an unsubstituted C1 to C20 alkyl group, an unsubstituted C2 to C10 alkenyl group, a group represented by Chemical Formula 1A, a group represented by Chemical Formula 1B, or a combination thereof.

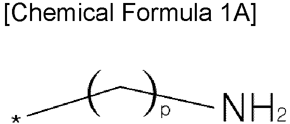

In Chemical Formula 1A, the parameter "p" is an integer from 1 to 20, and the symbol "*" represents a connection site.

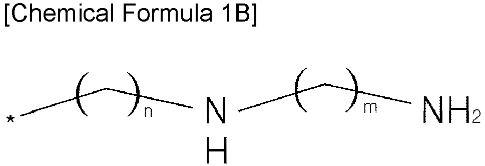

In Chemical Formula 1B, the parameter "n" is an integer from 1 to 20, the parameter "m" is an integer from 1 to 20, and "*" represents a connection site.

As an example, the parameter "p" may be an integer from 1 to 10, or may be an integer from 1 to 5.

In example embodiments, the parameter "n" may be an integer from 1 to 10, or an integer from 1 to 5, or an integer from 1 to 4. In addition, the parameter "m" may be an integer of 1 to 10, or an integer of 1 to 5, or an integer of 1 to 4, or an integer of 1 to 3. As an example, a weight average molecular weight (M) of the organosilane-based compound may be greater than or equal to about 90 g/mol, for example greater than or equal to about 100 g/mol, greater than or equal to about 110 g/mol, or greater than or equal to about 120 g/mol. Additionally, the weight average molecular weight (M) of the organosilane-based compound may be less than or equal to about 400 g/mol, for example, less than or equal to about 390 g/mol, less than or equal to about 385 g/mol, or less than or equal to about 380 g/mol. Within any of the above ranges, the sliding phenomenon can be effectively reduced or suppressed by the sliding controller.

For example, the organosilane-based compound may include 3-aminopropyl triethoxysilane, ethenyltriethoxy silane, octadecyl triethoxy silane, 3-(2-am inoethyl)am inopropyltrimethoxysilane, 3-(2-aminoethyl)aminopropylmethyldimethoxysilane, 4-aminobutyltriethoxysilane, or a combination thereof. When using the aforementioned compound, a sliding level of the electrode can be effectively controlled by using the organometallic compound, which can be advantageous in securing the lifecycle characteristics of the battery.

In an example embodiment, the compound having a contact angle of about 30 ° to about 140 ° may be included in an amount of about 5 wt% to about 100 wt%, for example about 50 wt% to about 100 wt%, about 80 wt% to about 100 wt%, about 90 wt% to about 100 wt%, about 95 wt% to about 100 wt%, or about 98 wt% to about 100 wt% based on a total weight, 100 wt% of the sliding controller. Within this range, the effect of reducing or suppressing the sliding phenomenon by the sliding controller can be improved or maximized.

There is no particular limitation on the shape of the sliding controller, and the sliding controller may be formed in various shapes such as, e.g., a net shape, diagonal shape, or dot shape, and as a representative example, the sliding controller may be formed in a shape as shown in FIGS. 6 and 7.

In example embodiments, an electrode active material layer 102 may be further included on the central area of the electrode current collector 101. As shown in FIGS. 6 and 7, a sliding controller 201 located on the edge area of the electrode current collector 101, and the electrode active material layer 102 can be located between both ends of the sliding controller 201.

In example embodiments, a ceramic insulating layer 202 located on the outer side surface of the sliding controller 201 may be further included. At this time, the sliding controller 201 may be located between the ceramic insulating layer 202 and the electrode active material layer 102. When the sliding controller 201 is between the ceramic insulating layer 202 and the electrode active material layer 102, an effect of reducing or suppressing the sliding phenomenon by the sliding controller 201 can be achieved, and an effect of improving cell lifecycle performance by the insulating layer 202 can be achieved.

For example, the ceramic insulating layer may include inorganic particles such as at least one of silica (SiO₂), alumina (Al₂O₃), zirconia ZrO₂, titania (TiO₂), tin oxide (SnO), magnesium oxide (MgO), calcium oxide (CaO), zinc oxide (ZnO), manganese dioxide (MnO₂), nickel oxide (NiO), iron oxide (Fe₂O₃), cobalt oxide (CoO₂), cerium oxide (CeO₂), yttrium oxide (Y₂O₃), niobium oxide (NdsOs), strontium titanate (SrTiOs), barium titanate (BaTiOs), boehmite, or a combination thereof. An average particle diameter (D₅₀) of the inorganic particles may be about 1 µm to about 25 µm, for example about 1 µm to about 15 µm, or about 3 µm to about 10 µm.

For example, the inorganic particles may be included in an amount of about 70 wt% to about 99 wt%, for example about 75 wt% to about 98 wt%, or about 80 wt% to about 95 wt% based on 100 wt% of the ceramic insulating layer. Within any of the above ranges, it is possible to secure insulating properties by the ceramic insulating layer, as well as secure a desired level of strength.

In example embodiments, the ceramic insulating layer may include a binder that is or includes at least one of polyethylene, polypropylene, polyethyleneterephthalate, polybutyleneterephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulfide, polyethylenenaphthalate, TEFLON (tetrafluoroethylene), polytetrafluoroethylene, polyvinylidene fluoride, or a combination thereof.

For example, the binder may be included in an amount of about 1 wt% to about 30 wt%, for example about 5 wt% to about 25 wt%, or about 10 wt% to about 20 wt% based on 100 wt% of the ceramic insulating layer. Within this range, improved, desired or advantageous adhesion of the ceramic insulating layer can be achieved, and the insulating function by the ceramic insulating layer can be effectively achieved.

For example, an average thickness of the ceramic insulating layer may be about 3 µm to about 40 µm, for example about 5 µm to about 35 µm, about 10 µm to about 30 µm, or about 15 µm to about 25 µm. As another example, an average width of the ceramic insulating layer may be about 5 µm to about 5,000 µm, for example about 100 µm to about 4,500 µm, about 500 µm to about 4,300 µm, about 1,000 µm to about 4,000 µm, or about 1,500 µm to about 3,500 µm. Within any of the above ranges, the ceramic insulating layer may effectively exert an insulation function. Herein, a method of measuring the average thickness and the average width of the ceramic insulating layer is not particularly limited, for example, the average thickness of the ceramic insulating layer may be an average value of thicknesses at any five (5) points at equal intervals on the ceramic insulating layer 202 in the thickness direction (X) of FIG. 6. Similarly, the average width of the ceramic insulating layer may be an average value of widths at any five (5) points at equal intervals on the ceramic insulating layer 202 in the width direction (Y) of FIG. 6.

In example embodiments, the sliding controller 201 may have an average thickness of about 1 µm to about 40 µm, for example, about 2 µm to about 30 µm, about 3 µm to about 25 µm, or about 5 µm to about 20 µm. Within any of the above ranges, the effect of controlling a contact angle of the electrode slurry by the sliding controller may be substantially efficiently exerted. Herein, the average thickness of the sliding controller may be, for example, an average value of thicknesses at any five (5) points at equal intervals on the sliding controller 201 in the thickness direction (X) of FIG. 6.

For example, the sliding controller may have an average width of about 3 µm to about 500 µm, for example, about 10 µm to about 400 µm, about 20 µm to about 300 µm, about 50 µm to about 200 µm, or about 80 µm to about 150 µm. Within any of the above ranges, the effect of controlling a contact angle and reducing or suppressing the sliding phenomenon may be sufficiently exerted, through which the lithium precipitation may be more effectively suppressed. Herein, the average width of the sliding controller may be, for example, an average value of widths at any five (5) points at equal intervals on the sliding controller 201 in the width direction (Y) of FIG. 6.

The electrode active material layer may have an average thickness of about 10 µm to about 300 µm, for example, about 15 µm to about 290 µm, about 20 µm to about 280 µm, or about 30 µm to about 250 µm. Herein, the average thickness of the electrode active material layer may be, for example, an average value of thicknesses at any five (5) points at equal intervals on the electrode active material layer 102 in the thickness direction (X) of FIG. 6.

In example embodiments, a ratio of an average thickness of the sliding controller to an average thickness of the electrode active material layer may be about 0.5 % to about 90 %, for example about 0.8 % to about 60 %, about 1 % to about 50 %, about 1.5 % to about 30 %, or about 2 % to about 10 %. Within any of the above ranges, it may be advantageous to improve the lifecycle of the battery through contact angle control by the sliding controller.

For example, a ratio of the average width of the sliding controller to the average width of the ceramic insulating layer may be about 1% to about 100%, for example, about 1.5% to about 80%, about 2% to about 50%, about 2.5% to about 30%, or about 3% to about 10%. Within any of the above ranges, effective separation of the electrode active material layer and the ceramic insulating layer by the sliding controller, and battery performance improvement by the ceramic insulating layer, may be harmonized.

According to example embodiments, the electrode may be or include either a positive or a negative electrode without any limitation, and may thus correspond to a positive electrode or a negative electrode, or both positive and negative electrodes. Accordingly, when the electrode corresponds to a positive electrode, the aforementioned electrode current collector and electrode active material layer may respectively correspond to a positive electrode current collector and a positive electrode active material layer to be described later. Similarly, when the electrode corresponds to a negative electrode, the aforementioned electrode current collector and electrode active material layer nay respectively correspond to a negative electrode current collector and a negative electrode active material layer to be described later.

In example embodiments, the electrode may be or include a positive electrode, and the electrode current collector may be or include a positive electrode current collector containing, e.g., aluminum, stainless steel (SUS), or a combination thereof. Alternatively, the electrode may be or include a negative electrode, and the electrode current collector may be or include a negative electrode current collector including, e.g., at least one of copper, magnesium, stainless steel, titanium, iron, cobalt, nickel, zinc, aluminum, germanium, indium, lithium, or a combination thereof.

### Method of Preparing Electrode

In example embodiments, a method of preparing an electrode includes preparing an electrode current collector, forming a sliding controller on the edge area of the electrode current collector, wherein the sliding controller includes a compound having a contact angle of about 30 ° to about 140 °.

The above description relates to a method of manufacturing the electrode according to example embodiments, and in the following, the method of manufacturing the electrode according to example embodiments will be described in detail without redundant descriptions of the electrode.

in examples, the electrode current collector is prepared, and the sliding controller is formed on an edge area of the electrode current collector. For example, the sliding controller may be formed by mixing the compound with an contact angle of about 30 ° to about 140 ° in a solvent to prepare a slurry for forming a sliding controller, and coating the slurry for forming a sliding controller on the edge area of the electrode current collector through a discharge nozzle for the sliding controller, and subsequently drying the discharged slurry. Herein, the solvent may be or include at least ethanol, methanol, water, or a combination thereof.

In example embodiments, the method may further include forming an electrode active material layer on a central region of the electrode current collector. Herein, the sliding controller may be first formed on the edge area of the electrode current collector to effectively reduce or suppress the sliding phenomenon, which may occur at the end of the electrode active material layer in subsequently coating the electrode slurry for forming an electrode active material layer (e.g., positive electrode slurry for forming a positive electrode active material layer or negative electrode slurry for forming a negative electrode active material layer). Herein, the method of forming an electrode may adopt any method generally used for manufacturing a rechargeable lithium battery without particular limitations. For example, the electrode slurry (e.g., positive electrode slurry for forming a positive electrode active material layer or negative electrode slurry for forming a negative electrode active material layer) may be coated and dried on an electrode current collector, wherein the coating may be or include at least dipping, spray coating, bar-coating, die casting, comma coating, screen printing, and the like. In addition, the formation of the electrode slurry may use any generally-used solvent without particular limitations. After the drying, optionally, compressing may be further included. Herein, regarding the electrode slurry, the positive electrode slurry for forming a positive electrode active material layer refers to a slurry containing components included in a positive electrode to be described later, and the negative electrode slurry for forming a negative electrode active material layer refers to a slurry containing components included in a negative electrode to be described later, the components included in the positive electrode and the components included in the negative electrode are not repeatedly described.

In example embodiments, on the outer side surface of the sliding controller, a ceramic insulating layer may be further formed. Herein, the sliding controller and the ceramic insulating layer may be simultaneously or contemporaneously formed. For example, through the discharge nozzle for the sliding controller and a discharge nozzle for the ceramic insulating layer, the slurry for forming a sliding controller and the slurry for forming a ceramic insulating layer may be simultaneously or contemporaneously bi-coated on the electrode current collector. For example, the slurry for forming a sliding controller and the slurry for forming a ceramic insulating layer may be controlled to have different viscosities. When the slurry for forming the sliding controller and the slurry for forming the ceramic insulating layer have different viscosities, cost and time may be saved by reducing a process loss, while effectively hindering or preventing mixing between the ceramic insulating layer, the sliding controller, and the electrode active material layer.

### Rechargeable Lithium Battery

In example embodiments, a rechargeable lithium battery includes a positive electrode, a negative electrode, and an electrolyte, wherein at least one of the positive electrode and negative electrode is or includes the aforementioned electrode.

As an example, the rechargeable lithium battery may include a positive electrode, a negative electrode, a separator between the positive electrode and the negative electrode, and an electrolyte solution.

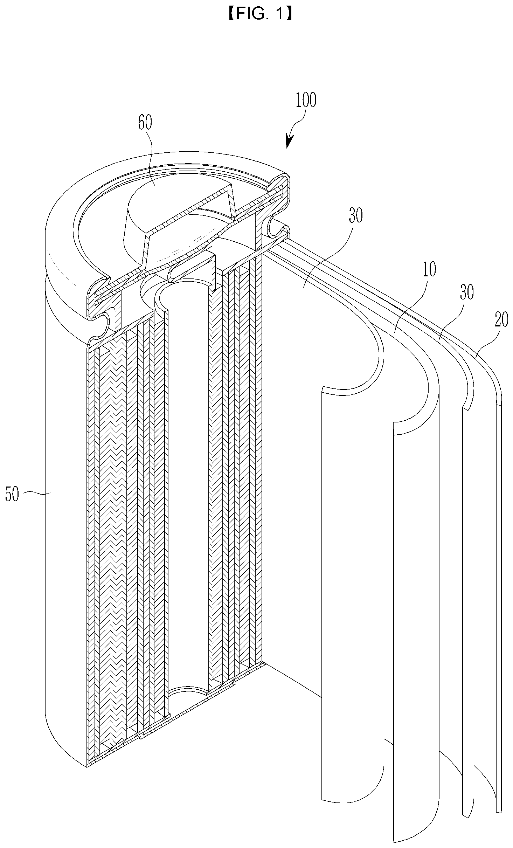

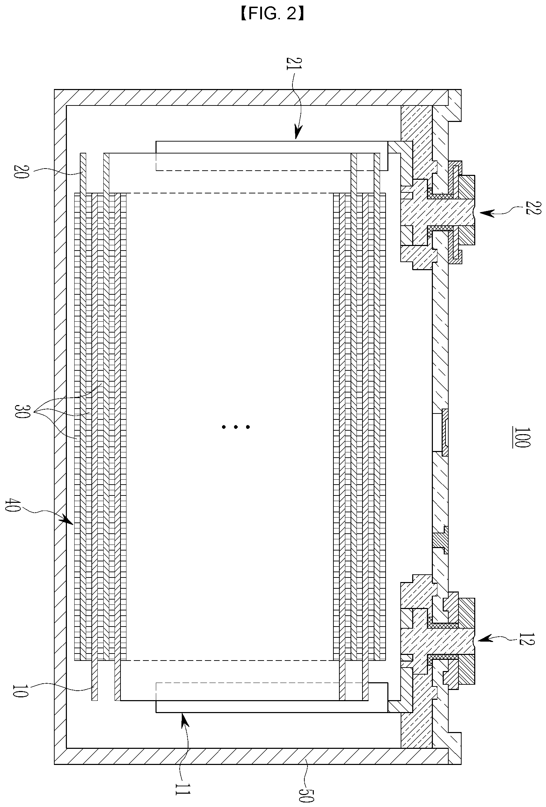

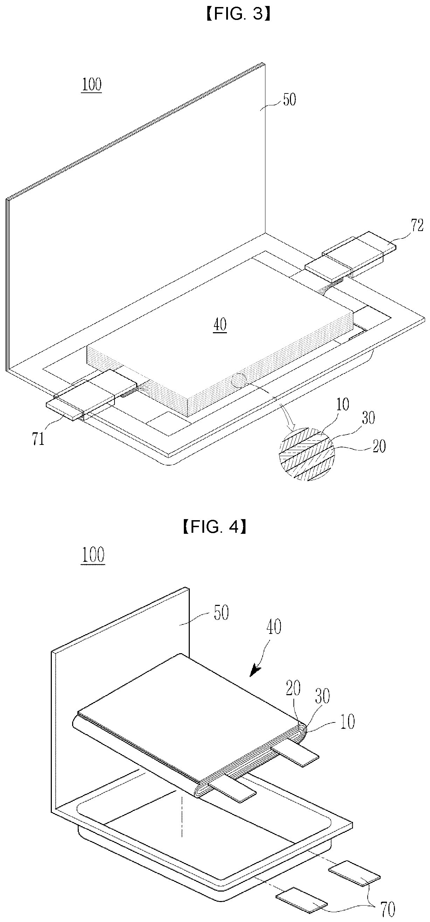

The rechargeable lithium battery may be classified into, e.g., cylindrical, prismatic, pouch, coin, etc. depending on the shape thereof. FIGS. 1 to 4 are schematic diagrams showing the rechargeable lithium battery according to example embodiments, where FIG. 1 is a cylindrical battery, FIG. 2 is a prismatic battery, and FIGS. 3 and 4 are pouch-shaped batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70, 71 and 72 constituting electrical paths for inducing the current formed in the electrode assembly 40 to the outside.

### Positive Electrode

The positive electrode includes a positive electrode current collector; and a positive electrode active material layer on the positive electrode current collector, wherein the positive electrode active material layer includes a positive electrode active material. In examples, the positive electrode active material layer may optionally further include a binder, a conductive material, or a combination thereof. When the positive electrode is or includes the aforementioned electrode, the aforementioned electrode current collector may be a positive electrode current collector, and the aforementioned electrode active material layer may be or include a positive electrode active material layer.

### Positive Electrode Active Material

The positive electrode active material may be applied without limitation as long as it is commonly used in rechargeable lithium batteries. For example, the positive electrode active material may include a compound (lithiated intercalation compound) capable of intercalating and deintercallating lithium. For example, at least one of a composite oxide of lithium and a metal such as at least one of cobalt, manganese, nickel, and combinations thereof may be used.

The composite oxide may be or include a lithium transition metal composite oxide, and examples thereof may include, e.g., at least one of lithium nickel-based oxide, lithium cobalt-based oxide, lithium manganese-based oxide, lithium iron phosphate-based compound, cobalt-free nickel-manganese-based oxide, and overlithiated layered oxide, or a combination thereof.

For example, the positive electrode active material may be or include a high-nickel positive electrode active material having a nickel content greater than or equal to about 80 mol% based on 100 mol% of a metal excluding lithium in the lithium transition metal composite oxide. A nickel content in the high-nickel positive electrode active material may be, e.g., greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium. The high-nickel positive electrode active material can realize high capacity and can be applied to high-capacity, high-density rechargeable lithium batteries.

As another example, a compound represented by any one of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{b}Co_{c}L¹_{d}GₑO₂ (0.90 ≤ a ≤ 1.8, 0 ≤ b ≤ 0.9,0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8)

In the above chemical formulas, A is or includes Ni, Co, Mn, or a combination thereof; X is or includes Al, Ni, Co, Mn, Cr, Fe, Mg, Sr, V, a rare earth element or a combination thereof; D is or includes O, F, S, P, or a combination thereof; G is or includes Al, Cr, Mn, Fe, Mg, La, Ce, Sr, V, or a combination thereof; Q is Ti, Mo, Mn, or a combination thereof; Z is or includes Cr, V, Fe, Sc, Y, or a combination thereof; and L¹ is Mn, Al or a combination thereof.

### Binder

The binder improves binding properties of positive electrode active material particles with one another and with a current collector. Examples of binders may include, e.g., at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity and any electrically conductive material may be used as a conductive material unless the electrically conductive material causes a chemical change. Examples of the conductive material may include a carbon-based material such as, e.g., at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The content of the binder and of the conductive material may be about 0.5 wt% to about 5 wt% based on 100 wt% of the positive electrode active material layer.

The positive electrode current collector may include Al, but is not limited thereto.

### Negative Electrode

The negative electrode is a negative electrode current collector, and a negative electrode active material layer on the negative electrode current collector, and the negative electrode active material layer includes a negative electrode active material and may further include a binder, a conductive material, or a combination thereof. When the negative electrode corresponds to the aforementioned electrode, the aforementioned electrode current collector may be or include a negative electrode current collector, and the aforementioned electrode active material layer may be or include a negative electrode active material layer.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example at least one of crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be at least one of a soft carbon, a hard carbon, a mesophase pitch carbonization product, calcined coke, and the like.

The lithium metal alloy includes an alloy of lithium and a metal such as at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, about 0.5 µm to about 20 µm. According to example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a silicon content may be about 10 wt% to about 50 wt%, and a content of amorphous carbon may be about 50 wt% to about 90 wt%, based on 100 wt% of the silicon-carbon composite. In addition, when the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be in the form of silicon alone, in the form of a silicon alloy, or in an oxidized form. The oxidized form of silicon may be represented by SiOₓ (0<x<2). The atomic content ratio of Si:O, which indicates a degree of oxidation, may be about 99:1 to about 33:67. As used herein, when a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder may be configured to provide sufficient adhesion of the negative electrode active material particles to each other as well as sufficient adhesion of the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

A content of the negative electrode active material may be about 95 wt% to about 99.9 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be or include an electrolyte solution, which may include a non-aqueous organic solvent and a lithium salt.

The non-aqueous organic solvent may constitute a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types of non-aqueous organic solvent are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include at least one of vinylethyl carbonate, vinylene carbonate, or an ethylene carbonate-based compound to improve battery lifecycle.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

A concentration of lithium salt may be within the range of about 0.1 M to about 2.0 M. When the concentration of lithium salt is within the above range, the electrolyte solution has an appropriate or desired ionic conductivity and viscosity, and thus improved, desired or advantageous performance can be achieved and lithium ions can move effectively.

### Separator

Depending on the type of rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of any one polymer such as, e.g., at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Manufacture of Negative Electrode

A slurry for forming a sliding controller was prepared by diluting 3-aminopropyl triethoxysilane to 20 wt% in an ethanol solvent.

A slurry for forming a ceramic insulating layer was prepared by mixing 85 wt% of boehmite (an average particle diameter (D₅₀): 3.3 µ m, Product name: JD3M, Manufacturer: Ketone) and 15 wt% of a PVdF binder in an NMP solvent.

Each slurry was bi-coated on both ends of edge areas of a copper foil current collector through a discharge nozzle of the slurry for forming a sliding controller and through a discharge nozzle of the slurry for forming a ceramic insulating layer.

Subsequently, a negative electrode slurry was prepared by mixing 97.5 wt% of graphite negative electrode active material, 1.5 wt% of carboxymethyl cellulose, and 1 wt% of a styrene butadiene rubber in a water solvent. The negative electrode slurry was coated on a central region of the copper foil current collector, and subsequently dried and compressed to manufacture a negative electrode having the sliding controller, the ceramic insulating layer, and a negative electrode active material layer, which corresponds to the structures illustrated in FIGS. 6 and 7.

Herein, the sliding controller was adjusted to have an average thickness of 5 µm and an average width of 100 µm, the ceramic insulating layer was adjusted to have an average thickness of 20 µm and an average width of 3,000 µm, and the negative electrode active material layer was adjusted to have an average thickness of 200 µm.

### 2. Manufacturing of Rechargeable Lithium Battery Cell

98.5 wt% of a LiNi_{0.8}Co_{0.15}Mn_{0.05}O₂ positive electrode active material, 1.0 wt% of a polyvinylidene fluoride binder, and 0.5 wt% of a carbon nanotube conductive material were mixed to prepare positive electrode active material layer slurry, and the slurry was coated on an aluminum foil current collector and then, dried and compressed to manufacture a positive electrode.

The positive and negative electrodes were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Example 2

A negative electrode and a rechargeable lithium battery cell were manufactured substantially in a similar manner as in Example 1 with a difference that the slurry for forming a sliding controller was prepared by using 45 wt% of ethenyltriethyloxy silane instead of the 20 wt% of 3-aminopropyl triethoxysilane.

### Example 3

A negative electrode and a rechargeable lithium battery cell were manufactured substantially in a similar manner as in Example 1 with a difference that the slurry for forming a sliding controller was prepared by using 12 wt% of octadecyl triethoxy silane instead of the 20 wt% of 3-aminopropyl triethoxysilane.

### Comparative Example 1

A negative electrode and a rechargeable lithium battery cell were manufactured substantially in a similar manner as in Example 1 with a difference that the sliding controller and the ceramic insulating layer were not formed.

### Evaluation Example 1: Contact Angle Evaluation

Each of the organometallic compounds according to Examples 1 to 3 was evaluated with respect to a contact angle. Herein, the contact angle was measured by dropping each of the organometallic compounds of Examples 1 to 3 on a negative electrode current collector at 25 ° C by using a contact angle measurement equipment (Product name: P-CAM/A, Manufacturer: GITsoft). The contact angle measurement results are shown in Table 1.

### Evaluation Example 2: Evaluation of Presence or Absence of Sliding

In order to evaluate the presence or absence of a sliding phenomenon, each cross-section of the negative electrodes of Example 1 and Comparative Example 1 was taken an image of with a scanning electron microscope (SEM), which is respectively shown in FIGS. 9 and 10.

Referring to FIGS. 9 and 10, in the negative electrode of Example 1, which is shown in FIG. 9, no sliding phenomenon was observed at the end of the electrode plate, but in the negative electrode of Comparative Example 1, which is shown in FIG. 10, the sliding phenomenon was observed at the end of the electrode plate. Accordingly, when the sliding controller was not formed, it was confirmed that the sliding phenomenon that an electrode active material layer became thinner towards an outward end thereof occurred. In addition, whether the sliding phenomenon occurred or not in Examples 2 and 3 were additionally evaluated, wherein the sliding phenomenon was given as '○', and no sliding phenomenon was given as 'X', as shown Table 1.

### Evaluation Example 3: Evaluation of Cell Performance

The rechargeable lithium battery cells according to Examples 1 to 3 and Comparative Example 1 were charged to an upper limit voltage of 4.25 V at a constant current of 0.1 C and to 0.05 C at the constant voltage and then, discharged to a discharge cut-off voltage of 2.5 V at 0.1 C at 25 ° C for initial charging and discharging. Subsequently, the cells were 100 cycles repeatedly charged and discharged and then, disassembled to check whether lithium was precipitated on the negative electrode surface, wherein lithium precipitation was given as '○', and no lithium precipitation was given as 'X', as shown in Table 1.

**(Table 1)**

| | Ex. 1 | Ex. 2 | Ex. 3 | Comp. Ex. 1 |
|---|---|---|---|---|
| Contact angle of sliding controller (° ) | 88.2 | 39.1 | 127.4 | - |
| Presence or absence of sliding phenomenon | X | X | X | ○ |
| Presence or absence of lithium metal precipitation | X | X | X | ○ |

Referring to Table 1, the organometallic compounds of Examples 1 to 3 all had a contact angle in a range of 30 ° to 140 °. On the contrary, when the negative electrode slurry of Comparative Example 1 was coated without the sliding controller to measure a contact angle in the same manner as in Evaluation Example 1, the contact angle was 24.7 °, which is out of the range of 30 ° to 140 °. Accordingly, it was conformed that the sliding phenomenon was effectively suppressed by using the sliding controller as in Examples 1 to 3 to have a larger contact angle than that of the negative electrode slurry.

In addition, in Examples 1 to 3, there was no sliding phenomenon, thereby, no precipitation of lithium metal. On the contrary, in Comparative Example 1, there was the sliding phenomenon, thereby, the precipitation of lithium metal.

While this disclosure has been described in connection with what is presently considered to be practical example embodiments, it is to be understood that the disclosure is not limited to the disclosed example embodiments. On the contrary, it is intended to cover various modifications and equivalent arrangements included within the spirit and scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |
| 101: | electrode current collector | | |
| 102: | electrode active material layer | | |
| 103: | sliding portion | 201: | sliding controller |
| 202: | ceramic insulating layer | | |

## Claims

1. An electrode, comprising
an electrode current collector (101); and
a sliding controller (201) located on an edge area of the electrode current collector (101);
wherein the sliding controller (201) includes a compound having a contact angle of about 30 ° to about 140 °.

2. The electrode as claimed in claim 1 or 2, wherein
the compound comprises an organosilane-based compound, preferably an alkoxy silane-based compound.

3. The electrode as claimed in claim 2, wherein
the organosilane-based compound comprises two to four alkoxy groups, preferably the alkoxy silane-based compound comprises two to four alkoxy groups.

4. The electrode as claimed in claim 2 or 3, wherein the organosilane-based compound, preferably the alkoxy silane-based compound, comprises a compound represented by Chemical Formula 1:
[Chemical Formula 1] R¹ₐSi(OR²)₄₋ₐ
wherein, in Chemical Formula 1, R¹ is a substituted or unsubstituted C1 to C20 alkyl group, or C2 to C10 alkenyl group, R² is a substituted or unsubstituted C1 to C10 alkyl group, and a is an integer of 1 to 3.

5. The electrode as claimed in any one of claims 2 to 4, wherein
the weight average molecular weight (M) of the organosilane-based compound is about 90 g/mol to about 400 g/mol, preferably the weight average molecular weight (M) of the alkoxy silane-based compound is about 90 g/mol to about 400 g/mol.

6. The electrode as claimed in any one of claims 1 to 5, wherein
the organosilane-based compound, preferably the alkoxy silane-based compound, comprises at least one of 3-aminopropyl triethoxysilane, ethenyltriethoxy silane, octadecyl triethoxy silane, 3-(2-aminoethyl)aminopropyltrimethoxysilane, 3-(2-aminoethyl)aminopropylmethyldimethoxysilane, 4-aminobutyltriethoxysilane.

7. The electrode as claimed in any one of claims 1 to 6, wherein
the electrode further comprises an electrode active material layer (102) located on a central area of the electrode current collector (101), and
the electrode active material layer (102) is located between both ends of the sliding controller (201).

8. The electrode as claimed in claim 7, wherein
the electrode active material layer (102) has an average thickness of about 10 µm to about 300 µm, and
a ratio of an average thickness of the sliding controller (201) to an average thickness of the electrode active material layer (102) is about 0.5% to about 90%.

9. The electrode as claimed in any one of claims 1 to 8, wherein
the electrode further comprises a ceramic insulating layer (202) located on an outer side surface of the sliding controller (201).

10. The electrode as claimed in any one of claims 1 to 9, wherein
the electrode further comprises an electrode active material layer (102) located on a central area of the electrode current collector (101), and
the sliding controller (201) is between the ceramic insulating layer (202) and the electrode active material layer (102).

11. The electrode as claimed in claim 9 or 10, wherein
the ceramic insulating layer (202) comprises inorganic particles including at least one of silica (SiO₂), alumina (Al₂O₃), zirconia ZrO₂, titania (TiO₂), tin oxide (SnO), magnesium oxide (MgO), calcium oxide (CaO), zinc oxide (ZnO), manganese dioxide (MnO₂), nickel oxide (NiO), iron oxide (Fe₂O₃), cobalt oxide (CoO₂), cerium oxide (CeO₂), yttrium oxide (Y₂O₃), niobium oxide (NdsOs), strontium titanate (SrTiOs), barium titanate (BaTiOs), boehmite,
an average particle diameter D₅₀ of the inorganic particles is about 1 nm to about 2000 nm, and
the inorganic particles are included in an amount of about 70 wt% to about 99 wt% based on 100 wt% of the ceramic insulating layer (202).

12. The electrode as claimed in any one of claims 9 to 11, wherein
the ceramic insulating layer (202) comprises a binder including at least one of polyethylene, polypropylene, polyethyleneterephthalate, polybutyleneterephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulfide, polyethylenenaphthalate, TEFLON (tetrafluoroethylene), polytetrafluoroethylene, polyvinylidene fluoride, and
the binder is included in an amount of about 1 wt% to about 30 wt% based on 100 wt% of the ceramic insulating layer (202).

13. The electrode as claimed in any one of claims 9 to 12, wherein
an average thickness of the ceramic insulating layer (202) is about 3 µm to about 40 µm, and
an average width of the ceramic insulating layer (202) is about 5 µm to about 5,000 µm.

14. A method of preparing an electrode, preferably an electrode as claimed in any one of claims 1 to 13, the method comprising:
preparing an electrode current collector (101), and
forming a sliding controller (201) on an edge area of the electrode current collector (101),
wherein the sliding controller (201) includes a compound having a contact angle of about 30 ° to about 140 °.

15. A rechargeable lithium battery (100), comprising
a positive electrode (10);
a negative electrode (20); and
an electrolyte;
wherein at least one of the positive electrode (10) and the negative electrode (20) comprises the electrode as claimed in any one of claims 1 to 13.
